# EUROPÄISCHE PATENTANMELDUNG

(11) **EP 4 707 652 A2**
(43) Veröffentlichungstag der Anmeldung: **11.03.2026**
(21) Anmeldenummer: 26152485.4
(22) Anmeldetag: 10.12.2020
(51) Int. Cl.: F16L 3/015

(54) **LEITUNGSFÜHRUNGSVORRICHTUNG UND MODULARE ENDBEFESTIGUNGEN MIT FLEXIBLER UMHÜLLUNG FÜR REINRAUMANWENDUNGEN**

(30) Priorität: 14.12.2019 DE 202019106980 U; 15.04.2020 DE 202020102090 U
(62) Teilanmeldung aus: 20824220.6
(71) Anmelder: igus SE & Co. KG, 51147 Köln (DE)
(72) Erfinder: Hermey, Andreas, 53773 Hennef (DE); Barten, Dominik, 53340 Meckenheim (DE); Mattonet, Peter, 51515 Kürten (DE)
(74) Vertreter: Lippert Stachow Patentanwälte Rechtsanwälte

(57) **Zusammenfassung**

Die Erfindung betrifft eine Leitungsführungsvorrichtung (1) umfassend eine verfahrbare flexible Umhüllung (2) mit kanalartigen Aufnahmen (7) für Leitungen (8) sowie Endbefestigungsvorrichtungen (20) umfassend jeweils zwei Klemmplatten (210) mit Hauptflächen (22) zum Ausüben einer Klemmkraft.

Die Endbefestigungsvorrichtung umfasst erfindungsgemäß zwei Plattenverbinder (240A; 240B) zum Halten der Klemmplatten (210) an jeweils einem seitlichen Endbereich (214) zusammen, jeweils mit zwei gegenüberliegenden Klammerbereichen (242) zum formschlüssigen Zusammenwirken mit einem Endbereich (214).

## Beschreibung

Die Erfindung betrifft allgemein Leitungsführungsvorrichtungen für Leitungen, wie **z.B.** Kabel, Schläuche oder dgl., insbesondere in einer Reinraumanwendung, nämlich Leitungsführungsvorrichtungen die hin- und hergehend, verfahrbar sind unter Bildung eines Umlenkbogens zwischen zwei Trumen, die von einem ersten Ende und einem zweiten Ende ausgehen.

Die Erfindung betrifft insbesondere verbesserte Endbefestigungen für solche dynamischen Leitungsführungsvorrichtungen.

Die vorliegend als gattungsgemäß betrachteten Leitungsführungsvorrichtungen für Reinraumanwendungen haben typisch eine oder mehrere längliche und flexible Umhüllungen, die meist kanalartige Aufnahmen für Leitungen aufweisen, welche sich in Längsrichtung durchgehend erstrecken und in einer Querrichtung nebeneinanderliegen. Solche schlauchartigen Umhüllungen bzw. ihre Aufnahmen werden auch als sog. "Pods" bezeichnet und schützen unter anderem vor Austreten von Abriebpartikeln die beim Verfahren der Leitungen entstehen.

Für die meisten Anwendungen ist eine erste Endbefestigungsvorrichtung für das erste Ende und eine zweite Endbefestigungsvorrichtung für das zweite Ende der Leitungsführungsvorrichtungen vorgesehen. Die Endbefestigungsvorrichtungen dienen zum Anschluss der Enden an einer von zwei Anschlussstellen, z.B. einer Maschine, wobei mindestens eine der Anschlussstellen relativ zur anderen beweglich ist.

Beispiele solcher Leitungsführungsvorrichtungen mit speziell hierfür geeigneten Endbefestigungsvorrichtungen sind in DE 10 2012 100 290 B4 oder in EP 3 226 252 A1 beschrieben.

Eine Endbefestigungsvorrichtung nach dem Oberbegriff aus Anspruch 1 bzw. 2 ist im Gebrauchsmuster DE 20 2019 103 276 U1 bzw. der nachveröffentlichten internationalen Patentanmeldung mit Anmeldenummer PCT/IB2020/000047 (vgl. dort FIG.13A-13D) beschrieben. Hierbei haben beide Endbefestigungsvorrichtungen je mindestens zwei Klemmplatten mit Hauptflächen zum Ausüben einer Klemmkraft, wobei die Klemmplatten jeweils mit einer Hauptrichtung senkrecht zur Längsrichtung der Umhüllung(en) bzw. der geführten Leitungen anordenbar sind. Ferner sind jeweils zwischen zwei Klemmplatten zwei Zugentlastungselemente vorgesehen, mit jeweils einer Klemmfläche für eine oder mehrere Leitungen in ihrer staubdichten Umhüllung. Die Zugentlastungselemente sind gegenüberliegend zwischen den zugewandten Hauptflächen der Klemmplatten angeordnet und halten die Umhüllung mitsamt der Leitung kraftschlüssig in Längsrichtung, insbesondere zur Entlastung der Leitungen bezüglich Zugkraft.

In der Endbefestigung gemäß DE 20 2019 103 276 U1 bzw. PCT/IB2020/000047 hat jede Klemmplatte jeweils zwei Haltebereiche welche je ein Zugentlastungselement in Richtung parallel zur Hauptfläche, d.h. gegen Verschiebung in Längsrichtung der Leitungen, an der Klemmplatte hält. Die Haltebereiche sind hierbei als durchgehende Langlöcher in den Klemmplatten vorgesehen, die sich in der Hauptrichtung der Klemmplatten erstrecken. Die Zugentlastungselemente ragen mit entsprechenden Vorsprüngen in diese Langlöcher hinein und sind hierdurch in Längsrichtung bzw. senkrecht zur Hauptrichtung der Klemmplatten gesichert. Klemmplatten mit einem Langloch als Haltebereich und vergleichbarer Funktion beschreibt auch z.B. DE 10 2012 100 533 B4 (vgl. dort z.B. FIG.8-9), dort hingegen für einzelne Zugentlastungselemente die nebeneinanderliegen.

Durch beidseitige Schraubverbindungen werden die Klemmplatten typisch miteinander verbunden, z.B. gegeneinander gespannt, und auch an der Anschlussstelle, z.B. der zu versorgenden Maschine oder Anlage befestigt.

Anhand der Zugentlastungselemente wird über die Klemmflächen ein Kraftschluss, insbesondere Reibschluss, auf die Umhüllungen und darin geführten Leitungen ausgeübt, sodass diese in Längsrichtung mittels der Endbefestigung an der jeweiligen Anschlussstelle festgelegt werden, wobei die Leitungen zugentlastet sind.

Ein Nachteil der bekannten Vorrichtungen besteht in der relativ aufwendigen Handhabung der Endbefestigungen bei der Montage und Demontage. Die Endbefestigungen müssen regelmäßig demontiert und wieder montiert werden zu Wartungszwecken, insbesondere wenn Leitungen ausgetauscht werden müssen, aufgrund ihrer durch die Bewegungszyklen begrenzten Lebensdauer. Beim Lösen der Klemmverbindung bzw. Schraubverbindungen zerfallen bekannte Endbefestigungen, wie etwa in DE 10 2012 100 533 B4, in eine Vielzahl Einzelteile und müssen dementsprechend auch vor dem Befestigen passend angeordnet und gehalten werden. Dieser Nachteil ist besonders ausgeprägt, wenn die Leitungsführungsvorrichtung mehrere übereinanderliegende Lagen aus Umhüllungen umfasst bzw. eine Vielzahl Leitungen führen soll.

Ein weiterer Nachteil wird darin gesehen, dass bekannte Endbefestigungen nur bedingt gut für stark unterschiedliche Leitungsdurchmesser geeignet sind, dies gilt insbesondere für die vereinfachte Bauweise nach DE 20 2019 103 276 U1.

Eine erste Aufgabe der Erfindung liegt mithin darin, eine Bauweise der Endbefestigung vorzuschlagen, welche die Handhabung erleichtert und dennoch besser, insbesondere modular, an unterschiedliche Leitungsdurchmesser angepasst werden kann. Dies wird gemäß einem ersten Aspekt der Erfindung erreicht durch eine Leitungsführungseinrichtung nach Anspruch 1 bzw. deren Endbefestigungsvorrichtung nach Anspruch 2.

Eine weitere Aufgabe liegt darin, die Modularität der Endbefestigung zu verbessern, insbesondere hinsichtlich der Eignung für unterschiedlichste Anordnungen der Umhüllungen bzw. Leitungen. Diese Aufgabe wird gemäß einem unabhängigen weiteren Aspekt der Erfindung erreicht durch eine Endbefestigungsvorrichtung nach Anspruch 10, welche ggf. auch die Handhabung erleichtern kann.

Gemäß einem weiteren unabhängigen Aspekt, wird ein modularer Baukasten für Endbefestigungsvorrichtungen nach Anspruch 20 vorgeschlagen, welcher u.a. die beiden o.g. Nachteile zumindest teilweise überwindet.

### ERSTER ASPEKT

Gemäß dem ersten Aspekt wird bei einer Leitungsführungsvorrichtung nach dem Oberbegriff aus Anspruch 1 bzw. einer Endbefestigungsvorrichtung nach dem Oberbegriff aus Anspruch 2 erfindungsgemäß vorgeschlagen, dass der Haltebereich der Klemmplatte einen hinterschnittenen Profilquerschnitt, betrachtet im Querschnitt senkrecht zur Hauptrichtung, bildet, d.h. einen Profilquerschnitt mit mindestens einer Hinterschneidung. Erfindungsgemäß haben die Zugentlastungselemente hierbei jeweils mindestens einen entsprechenden Verbindungsbereich, welcher zum formschlüssigen Hintergreifen der Hinterschneidung(en) gestaltet ist und entsprechend mit dem Profilquerschnitt des Haltebereichs korrespondiert bzw. zusammenwirkt.

Durch das Hintergreifen der Verbindungsbereiche der Zugentlastungselemente in bzw. an den Klemmplatten kann das Zugentlastungselement auch in Richtung senkrecht zur Hauptfläche an der jeweiligen Klemmplatte zuverlässig gehalten werden.

Diese Gestaltung bietet insbesondere den Vorteil, dass vor dem Befestigen oder nach dem Lösen bzw. Demontieren einer Klemmplatte die Zugentlastungselemente in vorbestimmter Weise bzw. vorgegebener Anordnung an dem Klemmplatten gehalten sind bzw. bleiben, d.h. die Endbefestigung leichter zu handhaben ist. Es wird insbesondere ein Auseinanderfallen in unterschiedliche Einzelteile vermieden, welche für die erneute oder anfängliche Montage aufwendig in der gewünschten Weise passend zu der Leitungsanordnung angeordnet werden müssten.

Dies ist nicht nur, aber insbesondere bei Anwendungen mit mehreren Lagen von Leitungen bzw. Umhüllungen und/oder mit einer Vielzahl unterschiedlichen modularen Zugentlastungselementen, die z.B. jeweils an die Leitungsdurchmesser angepasst sind, besonders vorteilhaft.

Weiterhin kann die hintergreifende Verbindung zwischen Zugentlastungselement und Klemmplatte auch die Kraftübertragung, insbesondere in Längsrichtung, verbessern bzw. Bewegungsspiel minimieren und hierdurch Abrieb in der Endbefestigung selbst minimieren. Versuche haben gezeigt, dass im Betrieb an den Endbefestigung typisch eine stärkere Partikelabgabe messbar als an den Trumen oder dem Umlenkbogen.

Vorteilhaft ist, abweichend von DE 20 2019 103 276 U1 bzw. PCT/IB2020/000047, eine Ausführungsform mit mehreren einzelnen modularen Zugentlastungselementen an jeder Klemmplatte. Bei einer solchen Weiterbildung sind die einzelnen Zugentlastungselemente gestaltet zur Anordnung in gegenüberliegenden Reihen zwischen einander zugewandten Hauptflächen der Klemmplatten, mit in jeder Reihe mehreren Zugentlastungselementen nebeneinander entlang der Hauptrichtung. So können unterschiedliche Zugentlastungselemente, jeweils modular passend zu den gewünschten Leitungen genutzt und an einer Klemmplatte vormontiert werden.

Weiterhin können zur Befestigung von optional verwendeten zusätzlichen Stützketten spezielle Befestigungselemente für das endseitige Festlegen der Stützkette eingesetzt werden. Solche Befestigungselemente haben bevorzugt ebenfalls Verbindungsbereiche die - entsprechend denen der Zugentlastungselemente - zur Zusammenwirkung mit dem Profilquerschnitt der Klemmplatten gestaltet sind.

Eine Mehrzahl Zugentlastungselemente und Befestigungselemente können somit modular bzw. wahlweise und jeweils unverlierbar an jeweils einer Klemmplatte angebracht werden um mit der Klemmplatte eine vormontierte Einheit zu bilden.

Die Zugentlastungselemente für Leitungen können an ihrer jeweiligen Klemmfläche z.B. mit einer Art Verzahnung mit in Längsrichtung der Leitungen erstreckten vorstehenden Zahnbereichen bzw. in Art eines Kamms mit einzelnen langestreckten Kammzinken gestaltet sein, um einen guten Reibschluss zur Zugentlastung zu bewirken und zugleich eine Verformbarkeit, welche das Zugentlastungselement für einen Bereich unterschiedlicher Leitungsdurchmessern verwendbar macht. Die Zugentlastungselemente können z.B. auch zur Bildung einer halbschalenförmigen Aufnahme mit einer konkav gekrümmten Klemmfläche gestaltet sein, welche eine möglichst passende bzw. mechanisch günstige Zugentlastung der Leitungen in Längsrichtung ggf. mitsamt dem entsprechenden Aufnahmekanal der Umhüllung durch Kraftschluss und ggf. Klemmverbindung erlaubt. Auf die Bauweise der Klemmfläche kommt es für die Erfindung nicht entscheidend an, es kommt jede geeignete Form in Betracht, welche zumindest per Kraftschluss die entsprechende Leitung in der jeweiligen Umhüllung in Längsrichtung festhält. Die den Leitungen zugewandte Klemmfläche kann an einer vorderen Hauptseite des Zugentlastungselements vorgesehen sein, welcher einer rückwärtigen Hauptseite mit dem Verbindungsbereich gegenüberliegt.

Die Verbindungsbereiche der Zugentlastungselemente bzw. optionalen Befestigungselemente für Stützketten sind gemäß dem ersten Aspekt zum formschlüssigen Eingriff in den hinterschnittenen Profilquerschnitt des Haltebereichs der zugeordneten Klemmplatte gestaltet, sodass das Element in Längsrichtung der Leitungen d.h. senkrecht zur Hauptrichtung der Klemmplatte und zugleich in Richtung senkrecht zur Hauptebene an der Klemmplatte gehalten ist. Die Elemente sind dabei bevorzugt lösbar mit einer Klemmplatte verbindbar, insbesondere quer zur Längsrichtung der Leitungen lösbar.

Die Zugentlastungselemente sind vorzugsweise einstückig und aus Kunststoff hergestellt, insbesondere materialeinheitlich aus einem relativ weichen Kunststoff, insbesondere einem Thermoplast, mit einer Festigkeit bzw. einer Härte ähnlich dem Material der flexiblen Umhüllung. Die Zugentlastungselemente können hierbei aus einem geeigneten Kunststoff, insbesondere Thermoplast, mit einer Shore Härte im Bereich von 20 Shore A (ShA 20) bis 65 Shore D (ShD 65), insbesondere im Bereich von 50 Shore A (ShA 50) bis 100 Shore A (ShA 100), hergestellt sein. Hierdurch werden Beschädigungen der Umhüllung vermieden und Abrieb durch reibschlüssiges Halten an der Umhüllung wird minimiert. Insbesondere sind die Zugentlastungselemente bevorzugt aus einem weicheren Material und/oder einer leichter verformbaren Gestalt gefertigt als die Klemmplatten, welche eine Klemmkraft auf die Zugentlastungselemente übertragen sollen.

Die Klemmplatten sind bevorzugt formfest, insbesondere biegesteif ausgeführt, durch geeignete Dimensionierung und/oder Materialwahl. Die Klemmplatte hat insbesondere zwei lange Stirnseiten und zwei kurze Schmalseiten und kann einen im Wesentlichen rechteckigen Grundriss aufweisen.

In bevorzugter Weiterbildung ist vorgesehen, dass der Profilquerschnitt der Klemmplatte an zumindest einer der kurzen Schmalseiten seitlich offen nach Außen mündet und vorzugsweise an beiden kurzen Schmalseiten seitlich offen nach Außen mündet. So können die Zugentlastungselemente einfach an einer oder beiden Schmalseiten der Klemmplatte mit den Verbindungsbereichen in die Klemmplatte eingeschoben und positioniert werden, in Querrichtung bzw. seitlicher Richtung in Bezug auf die Leitungen. Denkbar ist jedoch auch ein Anbringen durch Drehen, ähnlich z.B. einer Bajonettkupplung oder dgl.

Besonders bevorzugt ist die Klemmplatte so gestaltet, dass der Profilquerschnitt sich über zumindest einen überwiegenden Anteil der Länge, vorzugsweise über die gesamte Länge der Klemmplatte erstreckt, sodass eine Vielzahl Positionierungen der Zugentlastungselemente möglich sind.

Vorzugsweise ist zumindest der Profilquerschnitt über die Gesamtlänge der Klemmplatte bzw. in der Hauptrichtung gleichbleibend ausgeführt. Die Klemmplatte kann insgesamt über ihre Gesamtlänge bzw. in Hauptrichtung eine gleichbleibende Außenkontur im Querschnitt aufweisen. So können Klemmplatten z.B. preiswert und auf Maß aus langen Profilstücken hergestellt werden. Hierbei kann die Kontur in Frontansicht bzw. im Längsschnitt insbesondere an beiden Hauptseiten planar bzw. eben ausgeführt sein.

In einer besonders bevorzugten Ausführungsform hat die Klemmplatte, die typisch zwei lange Stirnseiten (lange Seiten) parallel zur Hauptrichtung aufweist, bevorzugt einen Profilquerschnitt der durch eine stirnseitige Nut an bzw. in jeder der beiden Stirnseiten gebildet ist, wobei die Nut vorzugsweise spiegelsymmetrisch zu einer Mittelsymmetrieebene gestaltet ist, die parallel zur Hauptfläche liegen kann. Bevorzugt sind dabei an beiden gegenüberliegenden Stirnseiten angreifende, entsprechende Verbindungsbereiche an den Zugentlastungselemente vorgesehen. Diese können dann klauen- oder klammerartig gegenüberliegend in die entsprechenden Stirnnuten eingreifen um die gewünschte Haltewirkung zu erzielen.

Durch beidseitigen Halt der Elemente an den Stirnseiten der Klemmplatten wird ein besonders stabiler Halt der Elemente an den Klemmplatten bewirkt, d.h. dass Verschiebungen bzw. Relativbewegungen zwischen Elementen und der zugeordneten Klemmplatten, z.B. durch Zug- und Schubkräfte beim Hin- und Herfahren der beweglichen Endbefestigung, minimiert werden, sodass auch Abrieb und resultierende Partikel minimiert werden können.

Insbesondere aber nicht nur bei stirnseitigen Haltebereichen an den Klemmpatten, ist es vorteilhaft wenn die Zugentlastungselemente jeweils stirnseitig in Längsrichtung über die Klemmplatte überstehen, zumindest an der dem angeschlossenen Trum abgewandten freien Seite der Endbefestigungsvorrichtung, vorzugsweise beidseitig. Hierdurch kann für die Leitungen ein Kantenschutz über der Kante der Klemmplatten gebildet werden, durch welchen die Leitungen geschützt und möglicher Abrieb weitergehend minimiert wird.

Besonders bevorzugt sind Verbindungsbereiche an den Zugentlastungselementen, welchen beidseitig an den Stirnseiten der Klemmplatte angreifen und/oder zugleich einen über die Breite des Elements durchgehenden Kantenschutz quer zur Längsrichtung bilden. Durch Aufreihen solcher Zugentlastungselemente kann ein in Querrichtung durchgehender Kantenschutz in Kombination mit einer stabilen Verbindung zwischen den Elementen und der Klemmplatte realisiert werden. Auch optionale Befestigungselemente für Stützketten oder optionale Abstandhalter können mit entsprechenden Verbindungsbereichen mit Kantenschutz gestaltet sein.

In einer Ausführungsform ist vorgesehen, dass jede Klemmplatte zwei abgewandte Hauptflächen aufweist und beidseitig, in bzw. an jeder der beiden Hauptflächen, jeweils ein Haltebereich für Zugentlastungselemente vorgesehen ist. Jeder Haltebereich bildet dabei senkrecht zur Hauptrichtung einen Profilquerschnitt mit Hinterschneidung, wobei beide Profilquerschnitte vorzugsweise für sich genommen identische Formgebung haben. So können an beiden Seiten Zugentlastungselemente und Befestigungselemente wahlweise angebracht und gehalten werden.

In einer Ausführungsform mit beidseitigen Haltebereichen ist vorgesehen, dass die beiden Haltebereiche in Längsrichtung bzw. in Richtung senkrecht zur Hauptrichtung zueinander versetzt an der Klemmplatte vorgesehen sind. Dabei können die Haltebereiche vorzugsweise rotationssymmetrisch zu einer Hauptmittelachse der Klemmplatte angeordnet sein, sodass passend gestaltete Zugentlastungselemente durch einfaches Umdrehen an beiden Seiten der Klemmplatte gleichermaßen verwendbar sind. Vorzugsweise sind die Haltebereiche bzw. Profilquerschnitte mittig in einer von zwei Breitenhälften der Klemmplatte angeordnet, wobei die beiden Breitenhälften der Klemmplatte insbesondere zueinander rotationssymmetrisch gestaltet sein können. Die Breitenhälfte bezeichnet hierbei eine Hälfte nach Halbierung entlang der Länge.

In einer bevorzugten Ausführungsform kann der bzw. jeder Haltebereich spiegelsymmetrisch gestaltet sein, insbesondere zu einer Mittelsymmetrieebene senkrecht zur Hauptfläche, d.h. insbesondere mit zwei spiegelsymmetrischen Hinterschneidungen. Dies vereinfacht insbesondere bei mittig angeordneten Haltebereichen die Handhabung weitergehend.

Alternativ oder ggf. auch ergänzend kann vorgesehen sein, dass jeder Haltebereich eine gegenüber der Hauptfläche vertiefte Profilnut und/oder einen gegenüber der Hauptfläche vorstehenden Profilvorsprung umfasst. Dieser kann beispielhaft mittig in der Hauptfläche oder mittig in einer Breitenhälfte, z.B. als in Hauptrichtung durchgehende Profilnut, gestaltet sein.

Grundsätzlich wird unter Profilquerschnitt vorliegend ein Querschnitt mit jeder Art Profil verstanden, das erfindungsgemäß ein Hintergreifen durch ein Zugentlastungselement erlaubt, um diesem Halt in Richtung senkrecht zur Hauptfläche der Klemmplatte zu bieten. Das Profil kann dabei eine Positivform, insbesondere einen Vorsprung, bilden und/oder eine Negativform (Freiraum), insbesondere eine Profilnut. Der Profilquerschnitt kann bei Herstellung der Klemmplatte mitgeformt, z.B. im Strangguss oder Spritzguss urgeformt, sein oder aber nachträglich spanend eingearbeitet werden, z.B. durch Fräsen.

Die Profilnut und/oder der Profilvorsprung kann jede geeignete Formgebung mit Hinterschneidung(en) aufweisen, z.B. einen T-förmigen, V-förmigen oder Schwalbenschwanz-förmigen oder ähnlichen hintergreifbaren Profilquerschnitt.

Die Verbindungsbereiche der Zugentlastungselemente haben einen zum Profilquerschnitt entsprechend konjugierten, insbesondere formschlüssig passenden Querschnitt und sollten in der Hauptrichtung, d.h. quer zur Längsrichtung der Leitungen, am Haltebereich durch ein geringes Spiel verschiebbar sein, um die Handhabung bei Montage oder nachträglicher Anpassung der Leitungsführung weiter zu erleichtern.

Merkmale des vorgenannten ersten Aspekts der Erfindung sind vorteilhaft mit denen des nachstehenden zweiten Aspekts kombinierbar und umgekehrt.

### ZWEITER ASPEKT

Gemäß einem unabhängigen zweiten Aspekt wird nach dem Oberbegriff aus Anspruch 10 eine Endbefestigungsvorrichtung zum Befestigen eines Endes einer gattungsgemäßen Leitungsführungsvorrichtung vorgeschlagen. Die Endbefestigungsvorrichtung umfasst mindestens zwei Klemmplatten mit Hauptflächen zum Ausüben einer Klemmkraft, wobei die Klemmplatten jeweils zwei seitliche Endbereiche und zwei lange Stirnseiten, die parallel zu einer Hauptrichtung verlaufen, aufweisen. Die Klemmplatten werden bestimmungsgemäß mit den langen Stirnseiten senkrecht zur Umhüllung bzw. den Leitungen angeordnet. Ferner hat die Endbefestigungsvorrichtung eine Anzahl, jedoch mindestens zwei Zugentlastungselemente, mit jeweils einer Klemmfläche für jeweils eine oder mehrere Leitungen, wobei die Zugentlastungselemente zur gegenüberliegenden Anordnung zwischen zugewandten Hauptflächen der Klemmplatten bestimmt sind.

Nach dem unabhängigen zweiten Aspekt wird erfindungsgemäß vorgeschlagen, dass zwei separate Plattenverbinder vorgesehen sind, die dazu dienen zwei zugeordnete Klemmplatten an jeweils einem von beiden seitlichen Endbereichen zu halten, wobei jeder Plattenverbinder zwei gegenüberliegende, insbesondere vertikal gegenüberliegende, Klammerbereiche aufweist, welche jeweils mit einem Endbereich einer der beiden Klemmplatten zusammenwirken. Erfindungsgemäß sind die Plattenverbinder gestaltet um die mindestens zwei Klemmplatten zusammen zu halten, insbesondere in Höhenrichtung bzw. senkrecht zur Plattenrichtung durch jeweils endseitiges Greifen der Klemmplatten.

Die beiden Plattenverbinder können die Klemmplatten insbesondere in vorbestimmten Abstand zueinander und/oder parallel zueinander halten.

Zwei Klemmplatten können jeweils an ihren seitlichen Endbereichen, die an den beiden kurzen (Schmal-)Seiten liegen, durch einen solchen separaten und zwischenliegenden Plattenverbinder paarweise aneinander gehalten und paarweise miteinander verbunden sein. Jeder der gegenüberliegenden Klammerbereiche greift bevorzugt zumindest formschlüssig an je einer Klemmplatte an.

Anhand der Plattenverbinder wird insbesondere die Handhabung bei mehrlagiger Anordnung mit mehreren Umhüllungen übereinander vereinfacht, da eine jeweilige Lage bereits gehalten wird, wenn die Plattenverbinder an den entsprechenden Klemmplatten für diese Lage angebracht sind. Die Plattenverbinder können zur Vorfixierung dienen und dabei in Verbindung mit geeigneten Zugentlastungselementen eine Klemmkraft auf die Leitungen in der Umhüllung erzielen. Eine gesonderte Schraubverbindung muss hierfür nicht hergestellt sein. Umgekehrt kann auch das Öffnen bzw. der Zugang zu einer einzelnen Lage, z.B. zum gezielten Austausch einer Leitung erleichtert werden, da bei einem mehrlagigen Aufbau angrenzende Lagen nicht demontiert werden müssen.

Ferner erlauben separate Plattenverbinder es, die Bauweise der Klemmplatten zu vereinfachen. Diese können z.B. wahlweise für die gewünschte Breite der Endbefestigung passend aus einem längeren Profil zugeschnitten werden.

Ein Plattenverbinder nach dem zweiten Aspekt kann mit seinen Klammerbereichen somit zwei Klemmplatten in Längsrichtung und senkrecht zur Hauptfläche paarweise verbinden und halten.

Die Plattenverbinder sind bevorzugt lösbar mit den Endbereichen der Klemmplatten verbunden, insbesondere seitlich bzw. in Querrichtung gegenüber den Klemmplatten verschiebbar, sodass ein seitliches Lösen ermöglicht ist.

Die Plattenverbinder können insbesondere in Art einer Klammer die beiden Klemmplatten miteinander verbinden und in Richtung senkrecht zur Hauptfläche in einem vorgegebenen Abstand halten, welcher durch die Plattenverbinder bestimmt ist. Ein Vorteil ist hierbei, dass eine Schraubverbindung zur Herstellung der gewünschten Zugentlastung nicht zwingend erforderlich ist, und der gewünschten Kraftschluss mit der Umhüllung bzw. den Leitungen durch geeignete Auswahl von Zugentlastungselementen und/oder Plattenverbindern erzielt werden kann.

Alternativ oder ergänzend hierzu sind die Klammerbereiche der Plattenverbinder besonders bevorzugt - analog zu den Verbindungsbereichen der Klemmelemente - zur Zusammenwirkung mit einem Profilquerschnitt der Klemmplatte ausgeführt, welcher vorzugsweise an beiden kurzen Schmalseiten offen nach Außen mündet. So können die Plattenverbinder leicht seitlich angebracht und wieder gelöst werden.

Weiterhin kann jeder Plattenverbinder einen Stützkörper umfassen, welcher einen Abstandhalter zu Vorgabe des vertikalen Abstands zwischen den Klemmplatten darstellt. Vorzugsweise hat der Stützkörper eine Bauhöhe, welche zumindest das Doppelte der Bauhöhe eines Zugentlastungselements, z.B. eines bestimmten zugeordneten Zugentlastungselements aus einem Bausatz, beträgt.

Bevorzugt ist im Stützkörper mindestens ein vertikales Durchgangsloch für eine Schraubverbindung vorgesehen, welche zum Befestigen, insbesondere an einer Anschlussstelle, dient.

Für beide Aspekte, d.h. ungeachtet des ersten oder zweiten Aspekts, sind nachfolgende weiterbildende Merkmale jeweils vorteilhaft.

In einer Ausführungsform ist jedes Zugentlastungselement so gestaltet, dass es in Längsrichtung über die Stirnseiten der Klemmplatten vorsteht und an einer der Klemmfläche abgewandten Rückseite eine Aufnahme bildet, in welcher die jeweilige Klemmplatte zumindest teilweise aufnehmbar ist.

Insbesondere in Kombination mit letztgenannter Bauweise und/oder dem zweiten Aspekt ist es vorteilhaft, wenn jedes Zugentlastungselement gegenüberliegende Verbindungsbereiche aufweist, zum formschlüssigen Eingreifen in eine korrespondierende Hinterschneidung einer Profilnut bzw. Formnut an der Stirnseite der Klemmplatte, um das jeweilige Zugentlastungselement in Richtung senkrecht zur Hauptfläche der jeweiligen Klemmplatte an dieser Klemmplatte zu halten. Hierbei kann die Bauhöhe der Verbindungsbereiche an sich vorzugsweise kleiner gleich der halben Plattenstärke einer Klemmplatte sein, sodass Zugentlastungselemente beidseitig ungehindert an derselben Klemmplatte befestigbar sind.

Bevorzugt stehen die Verbindungsbereiche der Elemente, insbesondere Zugentlastungselemente, wenn diese an einer Hauptseite der Klemmplatte angebracht sind, nicht über die gegenüberliegende Hauptseite über.

Grundsätzlich könnte an jeder Hauptseite der Klemmplatte genau ein Zugentlastungselement vorgesehen sein. Bevorzugt wird jedoch eine modulare Bauweise, bei welcher jeweils mehrere Zugentlastungselemente, insbesondere passend zur Anwendung ausgewählte Elemente aus einem Bausatz unterschiedlicher Zugentlastungselemente und ggf. Befestigungselemente für Stützketten, in einer Reihe in der Hauptrichtung an der Klemmplatte angeordnet sind.

Bevorzugt sind die Elemente jeweils zur Positionierung in der Hauptrichtung verschiebbar an einer Klemmplatte gehalten und/oder lösbar an einer Klemmplatte gehalten.

Eine besonders preiswerte Herstellung wird ermöglicht, wenn die Klemmplatten als im Wesentlichen flache Platten, insbesondere mit im Längsschnitt ebenen Hauptflächen bzw. mit in Hauptrichtung gleichbleibender Plattenstärke, ausgeführt sind.

Hierbei können die Klemmplatten aus einem durchgehenden Profil, z.B. aus einem extrudierten Metallprofil, insbesondere aus Aluminium, insbesondere mit einem Profilquerschnitt nach dem ersten Aspekt, durch Zuschneiden in gewünschten Längen hergestellt sein. Alternativ können die Klemmplatten z.B. auch aus verstärktem Kunststoff hergestellt sein z.B. im Spritzguss.

Die Zugentlastungselemente und ggf. Befestigungselemente andererseits sind vorzugsweise einteilig aus Kunststoff, insbesondere als Spritzgussteile, hergestellt.

Die Plattenverbinder sind vorzugsweise einteilig aus einem härteren Kunststoff als die Zugentlastungselemente hergestellt, insbesondere als Spritzgussteile, z.B. aus einem faserverstärkten Polymer. Die Plattenverbinder sind insbesondere in Richtung senkrecht zur Hauptfläche der Klemmplatten formfest, d.h. bei bestimmungsgemäßer Belastung nicht dehnbar bzw. komprimierbar, um in Zusammenwirkung mit den Klemmplatten einen Kraftschluss zwischen Zugentlastungselementen und Leitungen zu ermöglichen. Die gewünschte Kraft zum Halten der Leitung(en) kann über die geeignete Auswahl bzw. Dimensionierung der Plattenverbinder in Kombination mit geeigneter Auswahl bzw. Dimensionierung der Zugentlastungselemente erzielt werden. Eine Schraubverbindung ist hierzu nicht erforderlich.

Die Zugentlastungselemente können eine Wirkseite aufweisen, an welcher die Klemmfläche vorgesehen ist, welche z.B. konkav oder alternierend konkav/konvex gekrümmt oder auch verzahnt oder kammartig konkav/konvex geformt ist, im Querschnitt entlang der Hauptrichtung bzw. senkrecht zur Längsrichtung der Leitung(en) betrachtet. Die Klemmfläche kann dabei im allgemeinen geometrischen Sinne zylindrisch, d.h. mit gleichbleibendem Schnitt parallel zur Hauptrichtung gestaltet sein.

Es können insbesondere für unterschiedliche Leitungsdurchmesser unterschiedlich angepasste Zugentlastungselemente vorgesehen sein, welche modular mit einer Klemmplatte verbindbar sind.

Insbesondere bei mehrlagigen Anwendungen mit mehreren Umhüllungen übereinander ist es mechanisch günstig, wenn die Klemmplatten in beiden seitlichen Endbereichen jeweils mindestens zwei Durchgangslöcher für Schraubverbindungen aufweisen und zwischen den Endbereichen entlang der Hauptrichtung ein oder mehrere zusätzliche Durchgangslöcher für Schraubverbindungen aufweisen. Ein derartiges Durchgangsloch kann ggf. auch als Langloch ausgeführt sein, und zum Anbringen zusätzlicher Schrauben zur Befestigungs- und/oder Klemmwirkung dienen.

Die Plattenverbinder können mindestens zwei, vorzugsweise drei Durchgangslöcher für Schraubverbindungen aufweisen, welche bevorzugt zur fluchtenden Anordnung mit entsprechenden Durchgangslöcher für Schraubverbindungen in den Klemmplatten angeordnet sind.

Ein weiterer Vorteil der beiden Aspekte, insbesondere des zweiten Aspekts, besteht darin, dass ggf. zum Befestigen von mindestens zwei Umhüllungen in übereinanderliegenden Lagen bereits drei übereinander angeordnete Klemmplatten ausreichen, wobei an der mittleren Klemmplatte im montierten Zustand der Endbefestigung beidseitig Zugentlastungselemente gehalten sind, nämlich zum Festlegen sowohl der einen Umhüllung auf der einen Seite der mittleren Klemmplatte als auch der anderen Umhüllung auf der anderen Seite. Es ist somit nicht erforderlich, für jede Lage bzw. Umhüllung jeweils zwei Klemmplatten vorzusehen. Hierdurch werden Materialkosten gesenkt und die Handhabung wird weiter vereinfacht.

### DRITTER ASPEKT

Gemäß einem dritten unabhängigen Aspekt betrifft die Erfindung schließlich auch einen modularen Baukasten für gattungsgemäße Endbefestigungen. Nach dem unabhängigen Anspruch 20 bzw. dem dritten Aspekt ist der Baukasten in minimaler Ausführung gekennzeichnet durch zumindest fünf verschiedene Bauteile, nämlich:
- mindestens eine flache Klemmplatte;
- mindestens zwei unterschiedliche Arten von Zugentlastungselementen mit jeweils verschiedener Bauhöhe und jeweils baugleichen Verbindungsbereichen zum Sichern an der Klemmplatte zumindest in einer Längsrichtung;
- mindestens zwei unterschiedliche Arten von Plattenverbindern mit verschiedener Bauhöhe, wobei jeder Plattenverbinder zwei baugleiche gegenüberliegende Klammerbereiche aufweist, die jeweils zumindest formschlüssig der Klemmplatte zusammenwirken, insbesondere mit einem Endbereich der Klemmplatte.

Alle vorstehend beschriebenen Merkmale der einzelnen Bauteile, insbesondere der Klemmplatten, Zugentlastungselemente und Plattenverbinder sind auch vorteilhaft im Baukasten anwendbar.

Die Verwendung von zwei unterschiedlich hoch bauenden Plattenverbindern erlaubt insbesondere eine modulare Verwendung der Endbefestigung mit nur einer Bauart von Klemmplatten sowohl für eine mehrlagige Anordnung mit zwei oder mehr übereinander liegenden Umhüllungen die zwischen nur zwei Klemmplatten ggf. verschachtelt gehalten werden, als auch für einlagige Anordnungen. Ein solcher Baukasten lässt sich bereits mit minimaler Teileanzahl an die unterschiedlichen Anwendungen, insbesondere Leitungsdurchmesser, besser anpassen und vereinfacht dennoch Handhabung bei der Herstellung und bei der Wartung vor Ort. Bevorzugt wird jedoch eine Anzahl mit mehr als zwei unterschiedlicher Arten von Zugentlastungselementen für verschiedene Leitungsdurchmesser vorgesehen.

Besonders bevorzugt sind im Baukasten Klemmplatte und Zugentlastungselemente gemäß dem ersten Aspekt gestaltet, wobei die Klemmplatte jeweils mindestens einen Haltebereich aufweist mit einem Profilquerschnitt mit Hinterschneidung und jedes Zugentlastungselement jeweils einen Verbindungsbereich aufweist, um das Zugentlastungselement durch Hintergreifen der Hinterschneidung des Profilquerschnitts in Richtung senkrecht zur Hauptfläche der Klemmplatte an dieser zu halten.

In bevorzugter Ausführungsform aller Aspekte stehen die Zugentlastungselemente in Längsrichtung bzw. senkrecht zur Hauptrichtung der Klemmplatten über deren Stirnseiten hervor, insbesondere beidseitig und/oder greifen zumindest teilweise um die jeweilige Stirnseite um einen Kantenschutz zu bilden.

Weitere Einzelheiten und Vorteile der Erfindung lassen sich, ohne Beschränkung der Allgemeinheit des Vorstehenden, der nachfolgenden Erläuterung bevorzugter Ausführungsbeispiele anhand der beigefügten Zeichnungen entnehmen. Merkmale mit entsprechender bzw. identischer Struktur oder Funktion haben entsprechende Bezugszeichen und werden ggf. nicht wiederholt beschrieben.

Hierbei zeigen:
- FIG.1A-1B:: eine schematische Darstellung einer gattungsgemäßen Leitungsführungseinrichtung in perspektivischer Ansicht (FIG.1A) und in einem Querschnitt quer zur Längsrichtung (FIG.1B) gemäß dem Stand der Technik z.B. aus DE 20 2019 103 276 U1;
- FIG.2A-2C: ein erstes Ausführungsbeispiel einer Endbefestigung für eine Leitungsführungseinrichtung gemäß FIG.1A-1B in Perspektivansicht montiert (FIG.2A) und in Explosionsdarstellung (FIG.2B) und in Seitenansicht (FIG.2C);
- FIG.2D: eine Variante einer Endbefestigung nach FIG.2A-2C in Perspektivansicht mit anderen Zugentlastungselementen;
- FIG.3A-3B:: eine Querschnittsansicht und eine Seitenansicht eines zweiten Ausführungsbeispiels einer Endbefestigungsvorrichtung;
- FIG.4A-4B:: eine Querschnittsansicht und eine Seitenansicht eines dritten Ausführungsbeispiels einer Endbefestigungsvorrichtung;
- FIG.5A-5C:: ein viertes Ausführungsbeispiel einer Endbefestigungsvorrichtung im Querschnitt (FIG.5A) und in teilweiser Perspektivansicht (FIG.5B-5C);
- FIG.6A-6C:: ein fünftes Ausführungsbeispiel einer Endbefestigungsvorrichtung im Querschnitt (FIG.6A) und in teilweiser Perspektivansicht (FIG.6B-6C);
- FIG.7A-7B:: ein Frontansicht und eine Draufsicht eines weiteren Ausführungsbeispiels einer Endbefestigungsvorrichtung in Abwandlung von FIG.6A-6C; und
- FIG.8A-8C:: Draufsichten auf unterschiedliche Varianten von Klemmplatten, insbesondere für ein Ausführungsbeispiel nach FIG.2A-2D.

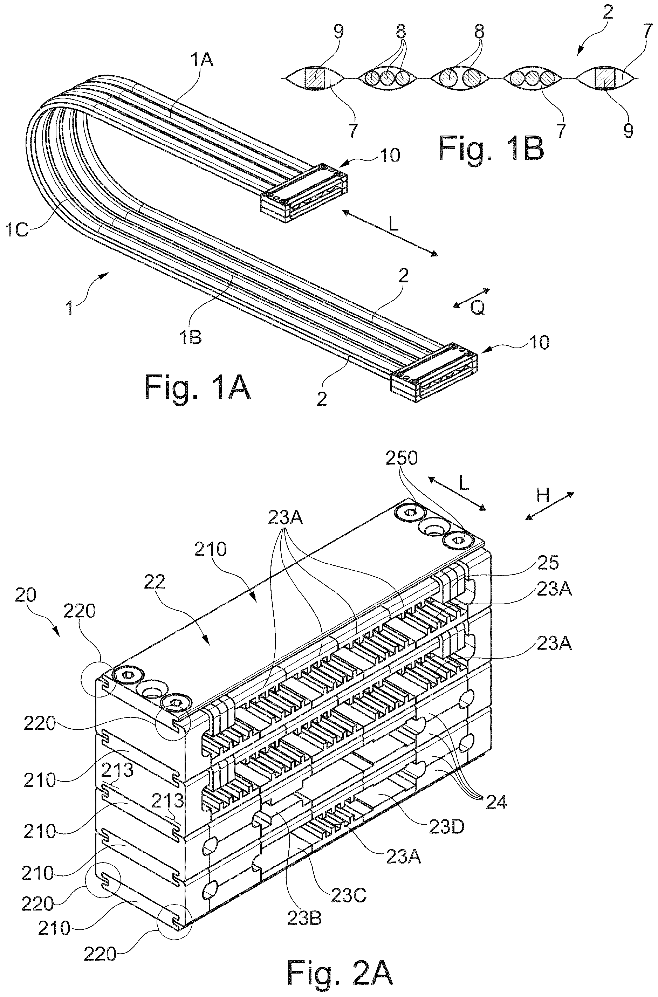

FIG.1A-1B zeigen ein Ausführungsbeispiel einer dynamischen d.h. hin und her verfahrbaren Leitungsführungseinrichtung 1 für Versorgungsleitungen 8, z.B. für die Strom- und Datenversorgung in einer Maschine. Die Leitungsführungseinrichtung 1 ist linear verfahrbar und bildet dabei ein bewegliches Obertrum 1A, ein ruhendes Untertrum 1B und dazwischen einen mitfahrenden Umlenkbogen 1C. Das Obertrum 1A ist in Längsrichtung L der Leitungsführungseinrichtung 1 verfahrbar. Der Umlenkbogen 1C hat einen vorgegebenen Umlenkradius bzw. Biegeradius um eine Querrichtung Q, senkrecht zur Längsrichtung L. Die Leitungsführungseinrichtung 1 umfasst in FIG.1A zwei in die Längsrichtung L langgestreckte flexible Umhüllungen 2 die geschachtelt übereinander liegen. Die Raumlage ist jedoch beliebig, die Leitungsführungseinrichtung 1 kann z.B. auch vertikal verfahren. Jede Umhüllung 2 ist insgesamt schlauchartig und ausreichend flexibel ausgeführt, u.a. durch geeignete Gestaltung und/oder Materialwahl, um eine reversibel biegsame Krümmung des Umlenkbogens 1C mit geringem Kraftaufwand zu erlauben und der Fahrbewegung eines beweglichen Anschlusses bzw. Mitnehmers mit möglichst geringem Widerstand zu folgen.

Jede staubschützende Umhüllung 2 (auch "Pod" genannt) ist insbesondere staubdicht ausgeführt und dient primär dazu, das Austreten von Partikeln, die insbesondere durch Abrieb der Leitungen und/oder Stützkette unvermeidbar entstehen, nach außen zu vermeiden. Die Bauweise der schlauchartigen Umhüllung 2 kann z.B. wie in DE 20 2019 103 276 U1 zu FIG.9-10 beschrieben gewählt sein, deren Lehre insoweit zur Verkürzung hier einbezogen ist. Auch andere schlauchartige Umhüllungen 2, z.B. aus dem einleitend genannten Stand der Technik, sind verwendbar.

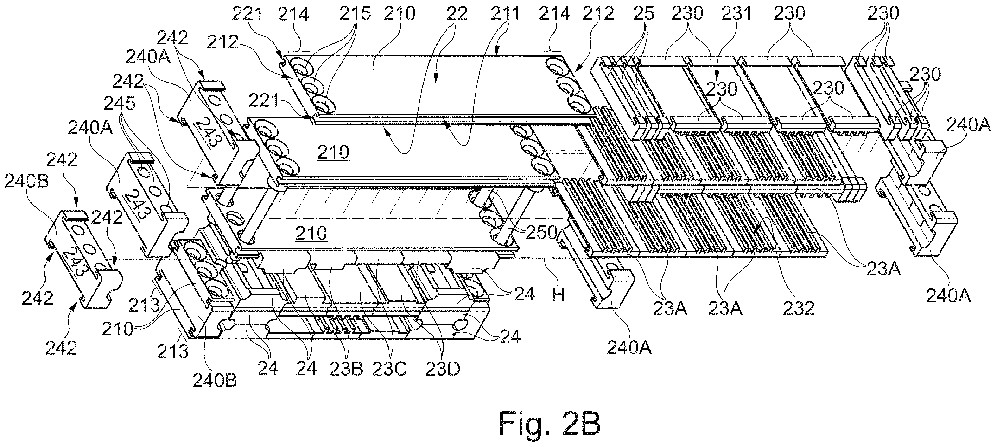

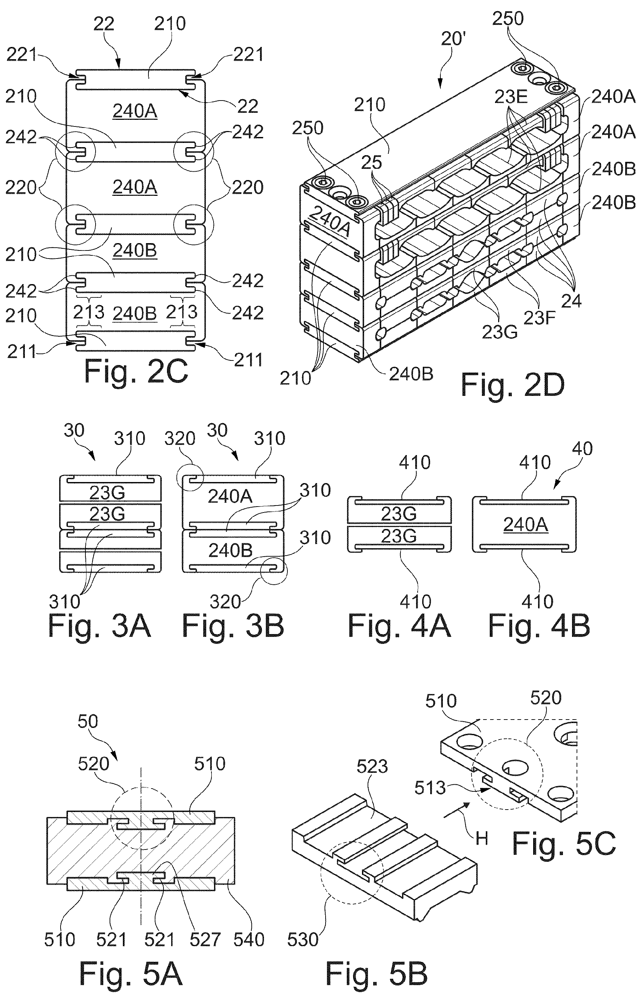

FIG.1A zeigt weiterhin zwei Endbefestigungsvorrichtungen 10, die jeweils an einem Ende der Leitungsführungseinrichtung 1 vorgesehen sind. Die Leitungsführungseinrichtung 1 wird anhand der Endbefestigungsvorrichtungen 10 an jeweils einer von zwei relativ zueinander beweglichen Anschlussstellen, bspw. an einer Maschine oder Anlage (nicht gezeigt), angeschlossen und befestigt. FIG.1A zeigt Endbefestigungsvorrichtungen gemäß DE 20 2019 103 276 U1 (vgl. dort FIG.13A-13D). Bevorzugte, erfindungsgemäße Ausführungsformen der Endbefestigungsvorrichtungen werden weiter unten zu FIG.2-8 erläutert, anstelle derjenigen aus FIG.1A.

FIG.1B zeigt rein beispielhaft eine mögliche Innenaufteilung zu einer der beiden Umhüllungen 2 in einem Querschnitt senkrecht zur Längsrichtung L. Die Umhüllung 2 kann z.B. einer Mehrzahl einzelner aus Kunststoff hergestellter Hülleinheiten zusammengesetzt sein (nicht gezeigt) oder einen einteiligen Schlauch mit mehreren Kanälen als Aufnahmen 7 bilden. In FIG. 1B hat die Umhüllung 2 beispielhaft fünf kanalartige Aufnahmen 7 für eine oder mehrere Versorgungsleitungen 8 bzw. Leitungsbündel sowie zwei Stützketten 9 in den äußeren Aufnahmen, welche den Radius des Umlenkbogens 1C vorgeben und eine freitragende Länge des ausgefahrenen Obertrums 1A stützen. Die Umhüllung 2 ist aus einem biegsamen weichelastischen Kunststoff, insbesondere einem Thermoplast, z.B. PE, PU, TPU, PTFE, expandiertes PTFE, PP oder dgl., hergestellt und hat über ihre Länge einen durchgehend gleichbleibenden Querschnitt senkrecht zur Längsrichtung L. Die Umhüllung 2 kann preiswert als Strangware in geeigneter Kunststoff-Extrusionstechnik hergestellt und auf eine geeignete Länge, z.B. von ca. 100mmm bis ca. 1500mm, abgelängt werden. Alle Aufnahmen 7 innerhalb der Umhüllung 2 sind räumlich voneinander getrennt und liegen in Querrichtung Q nebeneinander. Die Umhüllung 2 umgibt die Leitungen 8 bzw. Stützketten 9 über die Längserstreckung staubdicht und vermeidet somit das Austreten von Partikeln, die bspw. durch Abrieb oder Abnutzung entstehen.

FIG.2A-2B zeigen ein besonders bevorzugtes Beispiel einer erfindungsgemäßen Endbefestigungsvorrichtung 20. Die Endbefestigungsvorrichtung 20 ist an beiden Enden der Leitungsführungseinrichtung 1 verwendbar. Sie hat eine Anzahl baugleicher Klemmplatten 210, die in FIG.2A-2D als im Wesentlichen flache rechteckige Platten aus Metall, z.B. aus einem Aluminium-Extrusionsprofil hergestellt sind. Die Klemmplatten 210 bilden an jeder Hauptseite eine Hauptfläche 22 zum Ausüben einer Klemmkraft und sind mit ihrer Hauptrichtung H, die der Längserstreckung der Klemmplatte 210 entspricht, senkrecht zur Längsrichtung L der Umhüllung 2 (vgl. FIG.1A) angeordnet. Alle Klemmplatten 210 sind baugleich und haben zwei lange Stirnseiten 211 in der Hauptrichtung H, quer zu welchen die Leitungen 8 durchgeführt werden, und zwei kurze Schmalseiten 212.

Die Endbefestigungsvorrichtung 20 in FIG.2A-2D ist mehrlagig aufgebaut, für mehrere Umhüllungen 2 übereinander, und umfasst in jeder Lage eine Anzahl modularer Zugentlastungselemente 23A, 23B, 23C, 23D usw. unterschiedlicher Bauart. In jeder von hier beispielhaft vier Lagen liegen sich jeweils paarweise identische Zugentlastungselemente 23A, 23B, 23C bzw. 23D zwischen zwei Klemmplatten 210 gegenüber. Die Zugentlastungselemente 23A, 23B, 23C, 23D haben jeweils eine Klemmfläche 232 zum kraftschlüssigen Halten einer oder mehrerer Leitungen 8 (vgl. FIG.1C) in der jeweiligen kanalartigen Aufnahme 7 mitsamt der Umhüllung 2. Die Zugentlastungselemente 23A, 23B, 23C, 23D sind modular und zur aneinander gereihten und gegenüberliegenden Anordnung zwischen zugewandten Hauptflächen 22 der Klemmplatten 210 gestaltet.

Wie am besten aus der Seitenansicht FIG.2C ersichtlich, hat jede der baugleichen Klemmplatten 210 jeweils einen Haltebereich 213, u.a. für Zugentlastungselemente 23A, 23B, 23C, 23D usw., welcher diese gegen Verschiebung in Längsrichtung L an der jeweiligen Klemmplatte 210 hält. Wie am besten aus FIG.2B-2C ersichtlich haben die Klemmplatten 210 dazu jeweils an ihren langen Stirnseiten 211 ausgeprägte, voneinander abgewandte Haltebereiche 213 mit einem hier stirnseitigen Profilquerschnitt 220 mit jeweils einer Hinterschneidung im Querschnitt bzw. Seitenansicht betrachtet, wobei die Hinterschneidung in FIG.2A-2D durch eine etwa U-förmige bzw. in Hauptrichtung durchgehend gleichbleibende Nut 221 bzw. Vertiefung an den Stirnseiten 211 ausgeführt ist. Die Nut 221 ist hier zu beiden Mittelebenen senkrecht und parallel zu den Hauptflächen 22 jeweils spiegelsymmetrisch ausgeführt und hat einen gerundeten rechteckigen Querschnitt, mit etwa der halben Bauhöhe der Klemmplatte 210.

Die verschiedenen Zugentlastungselemente 23A, 23B, 23C, 23D usw. haben jeweils zwei Verbindungsbereiche 230, hier mit klauenförmigem Querschnitt zur Hauptrichtung H, welcher zum formschlüssigen Hintergreifen der Hinterschneidung bzw. Nut 221 im Profilquerschnitt 220 des Haltebereichs 213 der Klemmplatte 210, gestaltet ist, d.h. zum Eingreifen in die stirnseitige Nut 221 wie aus FIG.2A-2D ersichtlich. Die Verbindungsbereiche 230 sind jeweils an beiden Stirnseiten als baugleiche, spiegelsymmetrische Klauen ausgeführt, wobei jede Klaue eines Verbindungsbereichs 230 nicht ganz die Hälfte der freien Höhe der stirnseitigen Nut 221 einnimmt, sodass beidseitig an jeder Klemmplatte 210 jeweils Zugentlastungselemente 23A, 23B, 23C, 23D mit entsprechenden Verbindungsbereichen 230 in den Profilquerschnitt 220 des Haltebereichs 213 eingreifen können, vgl. FIG.2C.

Zwischen den gegenüberliegenden Verbindungsbereichen 230 ist an der Rückseite der Zugentlastungselemente 23A, 23B, 23C, 23D eine Aufnahme 231 ausgebildet, welche den Querschnitt der jeweils zugeordneten Klemmplatte 210 etwa hälftig aufnimmt. So kann ein und dieselbe Klemmplatte 210 für zwei aufeinanderfolgende Lagen von Umhüllungen 2 genutzt werden, wie die drei in Höhenrichtung innenliegenden Klemmplatten 210 in FIG.2A veranschaulichen. Die Zugentlastungselemente 23A, 23B, 23C, 23D haben unterschiedliche Klemmflächen und eine im Wesentlichen identische Grundfläche zur modularen Verwendung. Die Zugentlastungselemente 23A, 23B, 23C, 23D können aus demselben weichelastischen und abriebarmen Kunststoff wie die Umhüllungen 2 hergestellt sein (s. oben).

Durch die Gestaltung der Verbindungsbereiche 230 welche formschlüssig in die Hinterschneidung(en) der Klemmplatten 210 eingreifen, sind die Zugentlastungselemente 23A, 23B, 23C, 23D nicht nur in Längsrichtung L, sondern auch in Richtung senkrecht zur Hauptfläche 22 an der jeweiligen Klemmplatte 210 verliersicher gehalten werden.

In FIG.2A-2D sind weiterhin besondere Befestigungselemente 24 für Stützketten 9 gezeigt, welche die Stützketten 9 in Längsrichtung L an der Endbefestigungsvorrichtung 20 sichern. Die Befestigungselemente 24 haben an ihren Rückseiten baugleiche Verbindungsbereiche 230 und Aufnahmen 231 (nicht bezeichnet). Entsprechendes gilt auch für zusätzliche Abstandhalter 25 in den oberen beiden Lagen aus FIG.2A-2D. Diese Abstandhalter 25 erlauben einen seitlichen Versatz in Querrichtung Q zwischen den gegenüberliegen Zugentlastungselementen 23A, sodass in den beiden oberen Lagen jeweils zwei aufeinander liegende Umhüllungen, wie in FIG.1A gezeigt, gemeinsam zwischen zwei Klemmplatten 210 festgelegt werden können. Die Abstandhalter 25 haben, wie die Befestigungselemente 24, ebenfalls im Querschnitt zu den Verbindungsbereiche 230 identische Klauen zur Halterung an den Klemmplatten 210. Die Befestigungselemente 24 und Abstandhalter 25 sind damit ebenfalls in Längsrichtung L und senkrecht zu den Hauptflächen 22 sicher an den Klemmplatten 210 gehalten und fixierbar.

Wie FIG.2A-2D weiter zeigen mündet der Profilquerschnitt 220 beidseitig an den kurzen Schmalseiten 212 nach Außen **d.h.** seitlich offen zugänglich. Der Profilquerschnitt 220 ist über die gesamte Länge in Hauptrichtung H bzw. zwischen den Schmalseiten 212, durchgehend gleichbleibend. Hierdurch können Zugentlastungselemente 23A, 23B, 23C, 23D, Befestigungselemente 24 und Abstandhalter 25 wahlweise modular bzw. nach Bedarf an den Klemmplatten angebracht und an jeder Position positioniert werden durch Einschieben entlang der Hauptrichtung H.

FIG.2B veranschaulicht zudem beispielhaft verzahnte Klemmflächen 232 zum kraftschlüssigen Halten der Leitungen 8 mit der Umhüllung 2 an den Zugentlastungselemente 23A (in den oberen Lagen). Hierbei haben die Klemmflächen 232 in Längsrichtung L erstreckte alternierend zwischen Vertiefungen vorstehende Zahnleisten bzw. Kammzinken, welche eine gewisse Verformbarkeit zur Anpassung an verschiedene Durchmesser der Leitungen 8 erlauben und zugleich einen guten Reibschluss erzielen. Beispielhaft sei nur die Klemmfläche 232 der kurz beschrieben. Auch flächige Gestaltungen sind möglich, wie etwa bei den Zugentlastungselemente 23B, 23C, 23D welche sich vor allem durch unterschiedliche Bauhöhen bzw. - tiefen der jeweiligen Klemmflächen unterscheiden. Weiterhin sind auch Zugentlastungselemente 23E, 23F, 23G mit konkaven oder konkav/konvexen Klemmflächen, wie in der Variante von FIG.2D dargestellt verwendbar. Auch diese Zugentlastungselemente 23E, 23F, 23G haben Verbindungsbereiche 230, die mit den Haltebereichen 213 zusammenwirken. Die Endbefestigungsvorrichtung 20' in der Variante aus FIG.2D unterscheidet sich im Wesentlichen durch diese anders geformten Zugentlastungselemente 23E, 23F, 23G.

Wie FIG.2A-2D weiter zeigen hat die Endbefestigungsvorrichtung 20 gemäß einem weiteren Aspekt jeweils zwischen seitlichen Endbereichen 214 der Klemmplatten 210 zwei als separate Bauteile vorgesehene Plattenverbinder 240A; 240B, um jeweils zwei Klemmplatten 210 paarweise an jeweils einem von beiden seitlichen Endbereichen 214 zu greifen und zu verbinden. Hierzu hat jeder Plattenverbinder 240A, 240B zwei gegenüberliegende Klammerbereiche 242, die gemäß FIG.2A-2D in ihrer Bauweise den klauenartigen Verbindungsbereichen 230 der Zugentlastungselemente 23A... 23G entsprechen, d.h. zwei einander zugewandte stirnseitige Klauen aufweisen. Die Plattenverbinder 240A, 240B haben jedoch jeweils an ihrer Ober- und Unterseite jeweils einen entsprechenden Klammerbereich 242 zur Verbindung mit zwei Klemmplatten 210. Durch die Plattenverbinder 240A, 240B werden die Klemmplatten 210 jeweils paarweise miteinander verbunden und parallel in vorbestimmten Abstand aneinander gehalten. Hierzu greifen die gegenüberliegenden Klammerbereiche 242 jeweils paarweise zumindest formschlüssig in die stirnseitige Nut 221 der Klemmplatten 210, analog zu den Verbindungsbereichen 230 (vgl. FIG.2C). Im Beispiel aus FIG.2A-2D sind zwei Typen Plattenverbinder 240A; 240B gezeigt, die sich lediglich durch unterschiedliche Bauhöhe unterscheiden, sodass durch Auswahl der Plattenverbinder 240A; 240B der Freiraum zwischen den paarweise gegenüberliegenden Zugentlastungselementen 23A... 23G eingestellt werden kann. Zwischen zwei Klemmplatten 210 werden jeweils an beiden Endbereichen 214 baugleiche Plattenverbinder 240A bzw. 240B eingesetzt. Diese sind ebenfalls seitlich in der Hauptrichtung H einschiebbar und wieder lösbar. Die Plattenverbinder 240A, 240B haben einen blockförmigen Stützkörper 243, hier aus Vollmaterial insbesondere einem formfesten, unelastischen Kunststoff wie z.B. einem faserverstärkten Polyamid. Der Stützkörper 243 einen vertikalen Abstandhalter zu Vorgabe des vertikalen Abstands zwischen den Klemmplatten 210. Die Plattenverbinder 240A, 240B unterscheiden sich insbesondere durch die Bauhöhe des Stützkörpers 243 und haben ansonsten identische Bauweise, insbesondere ihrer vertikal und horizontal spiegelsymmetrischen Klammerbereiche 242. Die Plattenverbinder 240A, 240B können einseitig eine konkave Aussparung zum Aufnahmeraum für die Umhüllungen aufweisen.

Die Plattenverbinder 240A, 240B haben jeweils identisch angeordnet in ihren Stützkörpern 243 drei in Längsrichtung L verteilte Durchgangslöcher 245 für Schraubverbindungen durch Schrauben 250. Die Durchgangslöcher 245 sind passend zur fluchtenden Anordnung mit entsprechenden Durchgangslöchern 215 für die Schrauben 250 in den Klemmplatten 210 angeordnet. Die beiden äußeren Schrauben 250 in den Endbereichen 214 können zur seitlichen Sicherung der fertig montierten Endbefestigungsvorrichtung 20; 20' genutzt werden, wie in FIG.2A/2D zu sehen. Hierzu kann in der unteren Klemmplatte 210 unterseitig jeweils in den entsprechenden Durchgangslöchern 215 eine Gewindebuchse eingeschlagen sein, oder eine Schraubenmutter verwendet werden. Die mittleren Durchgangslöcher 215, 245 können zur Befestigung der Endbefestigungsvorrichtung 20; 20' an der Anschlussstelle, d.h. am Festpunkt oder Mitnehmer genutzt werden (nicht gezeigt).

Wie aus FIG.2A-2D weiter ersichtlich dienen die Verbindungsbereiche 230 der Zugentlastungselementen 23A... 23G und auch der Befestigungselemente 24 und Abstandhalter 25 zugleich als Kantenschutz an den Stirnseiten 211 der Klemmplatten 210, sodass die Leitungen 8 nicht in Kontakt mit den Stirnseiten 211 der Klemmplatten 210 geraten können.

FIG.3A-3B zeigen eine Abwandlung mit einer Endbefestigungsvorrichtung 30, hier beispielhaft für zwei Lagen Umhüllungen, welche sich lediglich durch die Bauart der Klemmplatten 310 unterscheidet. Diese weisen ebenfalls einen Profilquerschnitt 320 mit einer Hinterschneidung auf, welche jedoch nicht zur Mittelebene der Klemmplatte 310 symmetrisch ist. Die Klemmplatte 310 entspricht in der Bauweise einer in Höhenrichtung halbierten Klemmplatte 210 aus FIG.2A-2D sodass zwischen zwei aufeinanderfolgenden Lagen zwei Klemmplatten 310, umgekehrt aufeinander angeordnet vorgesehen werden müssen. Dies erlaubt eine kostengünstigere Herstellung der Klemmplatte 310 mit weniger Materialaufwand.

Eine weitergehende Vereinfachung der Klemmplatte 410 ist in der Variante der Endbefestigungsvorrichtung 40 aus FIG.4A-4B dargestellt, hier wird eine im Wesentlichen flache Platte ohne Hinterschneidung verwendet, die besonders preiswert herstellbar ist. Das Beispiel nach FIG.4A-4B veranschaulicht ferner, dass der zweite Aspekt der Erfindung betreffend die Bauweise mit separaten Plattenverbindern 240A, 240B ggf. auch unabhängig vom ersten Aspekt, d.h. der Verbindung zwischen Zugentlastungselementen 23A... 23G und den Klemmplatten 410 verwendbar ist. In FIG.4A-4B müssen für jede Lage jeweils zwei Klemmplatten verwendet werden.

FIG.5A-5C zeigen ein Ausführungsbeispiel einer Endbefestigungsvorrichtung 50 mit einer alternativen Gestaltung des Profilquerschnitts 520 der Klemmplatte 510. Der Profilquerschnitt 520 ist hierbei als Kombination eines im Querschnitt T-förmigen Vorsprungs 527 mit zwei gespiegelten L-förmigen Nuten 521 als Hinterschneidungen im Plattenkörper der Klemmplatte 510 vorgesehen. Der Profilquerschnitt 520 ist an nur einer der beiden Hauptseiten der Klemmplatte 510 vorgesehen und zur vertikalen Längsmittelebene der Klemmplatte 510 spiegelsymmetrisch (FIG.5A). Auch bei der Klemmplatte 510 ist der Profilquerschnitt 520 in Hauptrichtung H durchgehend gleich und beidseitig seitlich offen zum Einschieben der Zugentlastungselemente 523 bzw. Plattenverbinder 540 usw. in Hauptrichtung H. Die Zugentlastungselemente 523 bzw. Plattenverbinder 540 haben einen entsprechend als formschlüssiges Gegenstück geformten Verbindungsbereich 530 mit passendem Querschnittsprofil.

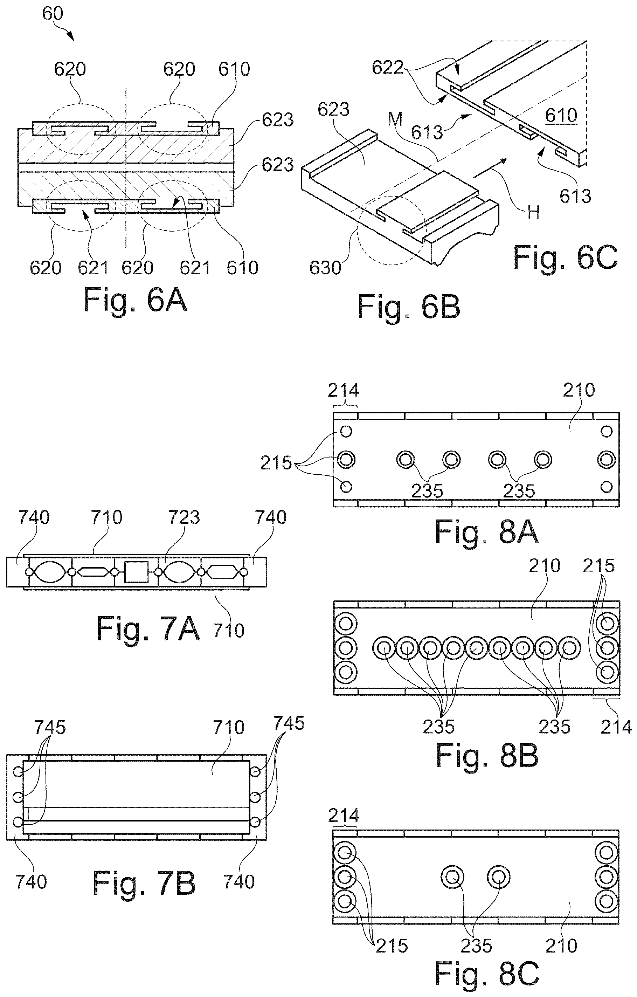

FIG.6A-6C zeigen ein weiteres Ausführungsbeispiel einer Endbefestigungsvorrichtung 60 mit einer alternativen Gestaltung des Profilquerschnitts 620 der Klemmplatte 610, hier mit zwei Haltebereichen 613 an jeder Klemmplatte 610. Die Klemmplatte hat an beiden Hauptflächen 622 jeweils ein Haltebereich 613 für Zugentlastungselemente 623. Die Haltebereiche 613 bilden auch hier senkrecht zur Hauptrichtung H einen Profilquerschnitt 620 mit einer doppelten Hinterschneidung, z.B. durch jeweils eine T-förmigen Nut 621, die im Plattenkörper der Klemmplatte 610 vollständig eingelassen ist.

Die beiden Haltebereiche 613 sind in Längsrichtung L d.h. senkrecht zur Hauptrichtung H zueinander versetzt an der Klemmplatte 610 je an einer der beiden abgewandten Hauptflächen 622 vorgesehen sind, und rotationssymmetrisch zu einer Hauptmittelachse M angeordnet. Die Haltebereiche 613 sind ferner mittig in einer von zwei Breitenhälften der Klemmplatte 610 angeordnet. So können mit der Bauweise der Klemmplatte 610 auch an beiden Seiten der Klemmplatte jeweils Zugentlastungselemente 623, Plattenverbinder (nicht gezeigt) mit entsprechend passend geformten Verbindungsbereichen angreifen. Sonstige Merkmale zu FIG.5A-5C und FIG.6A-6B entsprechen den vorstehend beschriebenen zu FIG.2A-2D.

Eine weitere Variante einer Endbefestigungsvorrichtung 70 ist in FIG.7A-7B gezeigt, bei welcher die Klemmplatte 710 z.B. den Querschnitt der Klemmplatte 610 aus FIG.6A-6C aufweisen kann. FIG.7A-7B veranschaulicht, dass eine seitliche Sicherung mit Schrauben auch ohne entsprechende Durchgangslöcher in den Klemmplatten 710 möglich ist, durch die seitlich überstehende Anordnung der Plattenverbinder 740, welche Durchgangslöcher 745 wie zu FIG.2C beschrieben aufweisen.

FIG.8A-8C zeigen Varianten der Klemmplatten 210 aus FIG.2A-2D. Zwischen den seitlichen Endbereichen 214 sind zusätzliche Durchgangslöcher 235 für Schraubverbindungen nach unterschiedlichen Bohrschemata vorgesehen für eine bedarfsweise verbesserte Klemmwirkung, z.B. bei mehrlagigen Endbefestigungen.

### Ausführungsformen (aus Stammanmeldung EP20824220.6):

In der Stammanmeldung mit Anm. Nr. EP20824220.6 (EP4073893), welche der vorliegenden Teilanmeldung zugrunde liegt, wurden insbesondere folgende Gegenstände bzw. Ausführungsformen offenbart und bei Einreichung (PCT/EP2020/085610) ursprünglich beansprucht:
1. Leitungsführungsvorrichtung (1) für Leitungen, wie z.B. Kabel, Schläuche oder dgl., insbesondere für eine Reinraumanwendung, umfassend:
   - mindestens eine längliche, flexible Umhüllung (2), die hin- und hergehend verfahrbar ist, und eine Anzahl von kanalartigen, sich in einer Längsrichtung (L) von einem ersten Ende zu einem zweiten Ende erstreckenden Aufnahmen (7) für Leitungen (8) aufweist;
   - eine erste Endbefestigungsvorrichtung (20) für das erste Ende und eine zweite Endbefestigungsvorrichtung (20) für das zweite Ende der Umhüllung;
   - wobei mindestens eine der Endbefestigungsvorrichtungen (20) mindestens zwei Klemmplatten (210) mit Hauptflächen (22) zum Ausüben einer Klemmkraft umfasst, wobei die Klemmplatten jeweils mit einer Hauptrichtung (H) senkrecht zur Längsrichtung (L) der Umhüllung anordenbar sind; sowie eine Anzahl Zugentlastungselemente (23A... 23G), mit jeweils einer Klemmfläche (232) für eine oder mehrere Leitungen und zur gegenüberliegenden Anordnung zwischen zugewandten Hauptflächen der Klemmplatten;

   wobei die Klemmplatten (210) jeweils einen Haltebereich (211) für Zugentlastungselemente aufweisen, welcher die Zugentlastungselemente in Richtung parallel zur Hauptfläche gegen Verschiebung in Längsrichtung an der Klemmplatte hält;
   **dadurch gekennzeichnet, dass**
   der Haltebereich (211) einen Profilquerschnitt (220) mit Hinterschneidung (221) bildet, und die Zugentlastungselemente (23A... 23G) jeweils mindestens einen Verbindungsbereich (230) aufweisen, welcher zum formschlüssigen Hintergreifen der Hinterschneidung mit dem Profilquerschnitt (220) des Haltebereichs korrespondiert, um das Zugentlastungselement (23A... 23G) auch in Richtung senkrecht zur Hauptfläche (22) an der jeweiligen Klemmplatte (210) zu halten.
2. Endbefestigungsvorrichtung (s20; 30; 40; 50; 60) zum Befestigen eines Endes einer Leitungsführungsvorrichtung (1), die hin- und hergehend verfahrbar ist und mindestens eine längliche, flexible Umhüllung (2) aufweist, welche eine Anzahl von kanalartigen, sich in einer Längsrichtung (L) von einem ersten Ende zu einem zweiten Ende erstreckenden Aufnahmen für Leitungen aufweist; umfassend
   - mindestens zwei Klemmplatten (210) mit Hauptflächen (22) zum Ausüben einer Klemmkraft, wobei die Klemmplatten jeweils mit einer Hauptrichtung (H) senkrecht zur Längsrichtung der Umhüllung anordenbar sind; sowie
   - eine Anzahl Zugentlastungselemente (23A... 23G), mit jeweils einer Klemmfläche (232) für eine oder mehrere Leitungen, und zur gegenüberliegenden Anordnung zwischen zugewandten Hauptflächen der Klemmplatten;

   wobei die Klemmplatten (210) jeweils einen Haltebereich (211) für Zugentlastungselemente aufweisen, welcher die Zugentlastungselemente in Richtung parallel zur Hauptfläche gegen Verschiebung in Längsrichtung an der Klemmplatte hält;
   **dadurch gekennzeichnet, dass**
   der Haltebereich (211) einen Profilquerschnitt (220) mit Hinterschneidung (221) bildet, und dass die Zugentlastungselemente (23A... 23G) jeweils mindestens einen Verbindungsbereich (230) aufweisen, welcher zum formschlüssigen Hintergreifen der Hinterschneidung mit dem Profilquerschnitt des Haltebereichs korrespondiert, um das Zugentlastungselement (23A... 23G) auch in Richtung senkrecht zur Hauptfläche (22) an der jeweiligen Klemmplatte (210) zu halten.
3. Vorrichtung nach Gegenstand 1 oder 2, wobei die Klemmplatte zwei lange Stirnseiten und zwei kurze Schmalseiten (212) aufweist, dadurch gekennzeichnet, dass der Profilquerschnitt (220) an zumindest einer der kurzen Schmalseiten (212) offen nach Außen mündet, vorzugsweise an beiden kurzen Schmalseiten offen nach Außen mündet, und/oder dass der Profilquerschnitt (220) sich über zumindest einen überwiegenden Anteil der Länge, vorzugsweise über die gesamte Länge der Klemmplatte (210) erstreckt.
4. Vorrichtung nach einem der Gegenstände 1 bis 3, wobei die Klemmplatte (210) zwei lange Stirnseiten (211) parallel zur Hauptrichtung (H) aufweist, dadurch gekennzeichnet, dass der Profilquerschnitt durch eine stirnseitige Nut (221) an jeder der beiden Stirnseiten (211) gebildet ist und entsprechende stirnseitige Verbindungsbereiche (230) an den Zugentlastungselementen (23A... 23G) vorgesehen sind, wobei die Verbindungsbereiche (230) vorzugsweise einen stirnseitig überstehenden Kantenschutz für die Leitungen bilden.
5. Vorrichtung nach einem der Gegenstände 1 bis 3, wobei jede Klemmplatte zwei abgewandte Hauptflächen (622) aufweist und beidseitig jeweils ein Haltebereich (613) für Zugentlastungselemente (623) vorgesehen ist, welcher senkrecht zur Hauptrichtung (H) einen Profilquerschnitt (620) mit einer Hinterschneidung bildet.
6. Vorrichtung nach Gegenstand 5, dadurch gekennzeichnet, dass die beiden Haltebereiche (613) in Richtung senkrecht zur Hauptrichtung (H) zueinander versetzt an der Klemmplatte (610) vorgesehen sind, und vorzugsweise rotationssymmetrisch zu einer Hauptmittelachse (M) angeordnet sind und/oder vorzugsweise mittig in einer von zwei Breitenhälften der Klemmplatte (610) angeordnet sind.
7. Vorrichtung nach einem der Gegenstände 1 bis 6, dadurch gekennzeichnet, dass der Haltebereich (213; 513) spiegelsymmetrisch gestaltet ist, insbesondere mit zwei spiegelsymmetrischen Hinterschneidungen (221; 521).
8. Vorrichtung nach einem der Gegenstände 1 bis 7, dadurch gekennzeichnet, dass jeder Haltebereich eine gegenüber der Hauptfläche vertiefte Profilnut (221; 521; 621) und/oder einen gegenüber der Hauptfläche vorstehenden Profilvorsprung (527) umfasst.
9. Vorrichtung nach Gegenstand 8, dadurch gekennzeichnet, dass die Profilnut (521; 621) und/oder der Profilvorsprung (527) einen T-förmigen, V-förmigen oder Schwalbenschwanz-förmigen Profilquerschnitt (520; 620) bildet und die Verbindungsbereiche (530; 630) der Zugentlastungselemente einen formschlüssig passenden Querschnitt haben.
10. Endbefestigungsvorrichtung (20; 30; 40; 50; 60) zum Befestigen eines Endes einer Leitungsführungsvorrichtung (1), die hin- und hergehend verfahrbar ist und mindestens eine längliche, flexible Umhüllung (2) aufweist, welche eine Anzahl von kanalartigen, sich in einer Längsrichtung (L) von einem ersten Ende zu einem zweiten Ende erstreckenden Aufnahmen (7) für Leitungen aufweist; umfassend
   - mindestens zwei Klemmplatten (210) mit Hauptflächen (22) zum Ausüben einer Klemmkraft, wobei die Klemmplatten jeweils zwei seitliche Endbereiche (214) und zwei lange Stirnseiten (211), die parallel zu einer Hauptrichtung (H) verlaufen, aufweisen und mit den Stirnseiten senkrecht zur Umhüllung (2) anordenbar sind; sowie
   - eine Anzahl Zugentlastungselemente (23A... 23G), mit jeweils einer Klemmfläche (232) für eine oder mehrere Leitungen, und zur gegenüberliegenden Anordnung zwischen zugewandten Hauptflächen der Klemmplatten; **dadurch gekennzeichnet, dass** zwei separate Plattenverbinder (240A; 240B) vorgesehen sind, um die mindestens zwei Klemmplatten (210) an jeweils einem von beiden seitlichen Endbereichen (214) zu halten, wobei jeder Plattenverbinder zwei gegenüberliegende Klammerbereiche (242) aufweist, welche jeweils zumindest formschlüssig mit einem Endbereich (214) zusammenwirken, und die Plattenverbinder (240A; 240B) gestaltet sind um die mindestens zwei Klemmplatten zusammen zu halten.
11. Vorrichtung nach Gegenstand 10, dadurch gekennzeichnet, dass die Plattenverbinder (240A; 240B) mit ihren Klammerbereichen (242) zwei Klemmplatten (210) in Längsrichtung (L) und senkrecht zur Hauptfläche (22) zusammen halten, wobei insbesondere die Klammerbereiche (242) mit einem hinterschnittenen Profilquerschnitt (220) der Klemmplatte (210) zusammenwirken und/oder die Klammerbereiche (242) vorzugsweise zum Umgreifen beider Stirnseiten (211) der Klemmplatte (210) in deren Endbereich (214) gestaltet sind, vorzugsweise mit zwei in Längsrichtung gegenüberliegenden Klauen.
12. Vorrichtung nach Gegenstand 10 oder 11, dadurch gekennzeichnet, dass jeder Plattenverbinder (240A; 240B) einen Stützkörper (243) umfasst, welcher einen Abstandhalter zu Vorgabe des vertikalen Abstands zwischen den Klemmplatten darstellt.
13. Vorrichtung nach einem der vorstehenden Gegenstände 1 bis 12, insbesondere 10 bis 12, dadurch gekennzeichnet, dass jedes Zugentlastungselement (23A... 23G) in Längsrichtung über die Stirnseiten (211) der Klemmplatten (210) vorsteht und an einer der Klemmfläche (232) abgewandten Rückseite eine Aufnahme (231) bildet, in welcher die jeweilige Klemmplatte (210) zumindest teilweise aufnehmbar ist.
14. Vorrichtung nach einem der vorstehenden Gegenstände 1 bis 13, dadurch gekennzeichnet, dass mehrere Zugentlastungselemente (23A... 23G) in einer Reihe in der Hauptrichtung (H) angeordnet sind und/oder verschiebbar an einer Klemmplatte (210) gehalten sind und/oder lösbar an einer Klemmplatte (210) gehalten sind.
15. Vorrichtung nach einem der vorstehenden Gegenstände 1 bis 14, insbesondere nach Gegenstand 10, dadurch gekennzeichnet, dass die Klemmplatten (210) als im Wesentlichen flache Platten, insbesondere mit im Längsschnitt ebenen Hauptflächen (22) bzw. mit in Hauptrichtung gleichbleibender Plattenstärke, ausgeführt sind.
16. Vorrichtung nach einem der vorstehenden Gegenstände 1 bis 15, dadurch gekennzeichnet, dass die Klemmplatten (210) aus Metall, vorzugsweise extrudierten Metallprofilen, insbesondere aus Aluminium, oder aus verstärktem Kunststoff, insbesondere als Spritzgussteile, hergestellt sind.
17. Vorrichtung nach einem der vorstehenden Gegenstände 1 bis 16, dadurch gekennzeichnet, dass
   - die Zugentlastungselemente (23A... 23G) einteilig aus Kunststoff, insbesondere als Spritzgussteile, hergestellt sind, wobei vorzugsweise die Plattenverbinder (240A; 240B) einteilig aus einem härteren Kunststoff als die Zugentlastungselemente (23A... 23G) hergestellt sind, insbesondere als Spritzgussteile; und/oder
   die Zugentlastungselemente (23A... 23G) aus einem Material gefertigt sind, das weicher ist als das Material die Klemmplatten (210) und/oder der Plattenverbinder (240A; 240B).
18. Vorrichtung nach einem der vorstehenden Gegenstände 1 bis 17, dadurch gekennzeichnet, dass die
   - Klemmplatten (210) in beiden seitlichen Endbereichen (214) jeweils mindestens zwei Durchgangslöcher für Schraubverbindungen und zwischen den Endbereichen (214) entlang der Hauptrichtung (H) ein oder mehrere zusätzliche Durchgangslöcher (215) für Schraubverbindungen aufweisen; und/oder
   - die Plattenverbinder (240A; 240B) mindestens zwei, vorzugsweise drei Durchgangslöcher (245) für Schraubverbindungen aufweisen, welche bevorzugt zur fluchtenden Anordnung mit entsprechenden Durchgangslöchern (215) für Schraubverbindungen in den Klemmplatten (210) angeordnet sind.
19. Endbefestigungsvorrichtung nach einem der vorstehenden Gegenstände 1 bis 18 zum Befestigen von mindestens zwei Umhüllungen (2) in übereinanderliegenden Lagen umfassend mindestens drei übereinander angeordnete Klemmplatten (210), wobei im montierten Zustand an der mittleren Klemmplatte beidseitig Zugentlastungselemente (23A... 23G) gehalten sind.
20. **Modularer Baukasten** für die Herstellung von Endbefestigungsvorrichtungen nach einem der vorstehenden Gegenstände 1 bis 19, gekennzeichnet durch:
   - mindestens eine flache Klemmplatte (210);
   - mindestens zwei unterschiedliche Arten von Zugentlastungselementen (23A... 23G) mit jeweils verschiedener Bauhöhe und jeweils baugleichen Verbindungsbereichen (230) zum Sichern an der Klemmplatte zumindest in einer Längsrichtung;
   - mindestens zwei unterschiedliche Arten von Plattenverbindern (240A; 240B) mit verschiedener Bauhöhe, wobei jeder Plattenverbinder zwei baugleiche gegenüberliegende Klammerbereiche (242) aufweist, die jeweils zumindest formschlüssig mit einem Endbereich (214) der flachen Klemmplatte (210) zusammenwirken.
21. Modularer Baukasten für Endbefestigungsvorrichtungen nach Gegenstand 21, dadurch gekennzeichnet, dass die Klemmplatte (210) jeweils mindestens einen Haltebereich (213) aufweist mit einem Profilquerschnitt (220) mit Hinterschneidung; und
   jedes Zugentlastungselement (23A... 23G) jeweils einen Verbindungsbereich (230) aufweist, um das Zugentlastungselement durch Hintergreifen der Hinterschneidung des Profilquerschnitts (220) in Richtung senkrecht zur Hauptfläche der Klemmplatte (210) an dieser zu halten.
22. Vorrichtung bzw. Baukasten nach einem der vorstehenden Gegenstände 1 bis 21, dadurch gekennzeichnet, dass die Zugentlastungselemente (23A... 23G) in Längsrichtung bzw. senkrecht zur Hauptrichtung der Klemmplatten (210) über die Klemmplatten vorstehen, insbesondere beidseitig, und vorzugsweise die jeweilige Stirnseite (211) der Klemmplatte (210) zumindest teilweise umgreifen.

### Leitungsführungsvorrichtung und modulare Endbefestigungen mit flexibler Umhüllung für Reinraumanwendungen

### Bezugszeichenliste

FIG.1A-1B:
   1 Leitungsführungseinrichtung
   1A Obertrum, 1B Untertrum, 1C Umlenkbogen
   2 Umhüllung
   7 Aufnahme
   8 Versorgungsleitung
   9 Stützkette
   10 Endbefestigungsvorrichtung
   L Längsrichtung
   Q Querrichtung
FIG.2A-2D:
   20; 20' Endbefestigungsvorrichtung
   24 Befestigungselemente
   25 Abstandhalter
   210 Klemmplatten
   211 Stirnseite (lange Seite)
   212 Schmalseite (kurze Seite)
   213 Haltebereich
   214 Endbereich
   22 Hauptfläche
   23A, 23B, 23C, 23D, 23E, 23F, 23G Zugentlastungselemente
   230 Verbindungsbereich (mit Klauen)
   231 Aufnahme
   232 Klemmfläche
   240A, 240B Plattenverbinder
   242 Klammerbereiche
   243 Stützkörper
   215, 245 Durchgangslöcher (für Schrauben)
   250 Befestigungsschrauben
   L Längsrichtung
   H Hauptrichtung (entspricht Querrichtung Q)
FIG.3A-3B; FIG.4A-4B
   30; 40 Endbefestigungsvorrichtung
   310; 410 Klemmplatten
   320 Profilquerschnitt
   240A, 240B Plattenverbinder
FIG.5A-5C; FIG.6A-6C
   50; 60 Endbefestigungsvorrichtung
   510; 610 Klemmplatte
   513; 613 Haltebereich
   520; 620 Profilquerschnitt
   521; 621 Nut
   622 Hauptfläche
   523; 623 Zugentlastungselement
   527 Vorsprung
   530; 630 Verbindungsbereich
   540 Plattenverbinder
   H Hauptrichtung
   M Hauptmittelachse
FIG.7A-7B
   710 Klemmplatte; 740 Plattenverbinder; 745 Durchgangslöcher
FIG.8A-8C
   210 Klemmplatte; 214 Endbereiche; 215, 235 Durchgangslöcher

## Patentansprüche

1. Endbefestigungsvorrichtung (20; 30; 40; 50; 60) zum Befestigen eines Endes einer Leitungsführungsvorrichtung (1), die hin- und hergehend verfahrbar ist und mindestens eine längliche, flexible Umhüllung (2) aufweist, welche eine Anzahl von kanalartigen, sich in einer Längsrichtung (L) von einem ersten Ende zu einem zweiten Ende erstreckenden Aufnahmen (7) für Leitungen aufweist; umfassend
- mindestens zwei Klemmplatten (210) mit im Wesentlichen flachen Hauptflächen (22) zum Ausüben einer Klemmkraft, wobei die Klemmplatten jeweils zwei seitliche Endbereiche (214) und zwei lange Stirnseiten (211), die parallel zu einer Hauptrichtung (H) verlaufen, aufweisen und mit den Stirnseiten senkrecht zur Umhüllung (2) anordenbar sind; sowie
- eine Anzahl Zugentlastungselemente (23A... 23G), mit jeweils einer Klemmfläche (232) für eine oder mehrere Leitungen, und zur gegenüberliegenden Anordnung zwischen zugewandten Hauptflächen der Klemmplatten; **dadurch gekennzeichnet, dass** zwei separate Plattenverbinder (240A; 240B) vorgesehen sind, um die mindestens zwei Klemmplatten (210) an jeweils einem von beiden seitlichen Endbereichen (214) zu halten, wobei jeder Plattenverbinder zwei gegenüberliegende Klammerbereiche (242) aufweist, welche jeweils zumindest formschlüssig mit einem Endbereich (214) zusammenwirken, und die Plattenverbinder (240A; 240B) gestaltet sind um die mindestens zwei Klemmplatten zusammen zu halten; vorzugsweise wobei jeder Plattenverbinder (240A; 240B) einen Stützkörper (243) umfasst, welcher einen Abstandhalter zu Vorgabe des vertikalen Abstands zwischen den Klemmplatten darstellt.

2. Endbefestigungsvorrichtung nach Anspruch 1, **dadurch gekennzeichnet, dass** die Plattenverbinder (240A; 240B) mit ihren Klammerbereichen (242) zwei Klemmplatten (210) in Längsrichtung (L) und senkrecht zur Hauptfläche (22) zusammen halten, wobei insbesondere die Klammerbereiche (242) mit einem hinterschnittenen Profilquerschnitt (220) der Klemmplatte (210) zusammenwirken und/oder die Klammerbereiche (242) vorzugsweise zum Umgreifen beider Stirnseiten (211) der Klemmplatte (210) in deren Endbereich (214) gestaltet sind, vorzugsweise mit zwei in Längsrichtung gegenüberliegenden Klauen.

3. Endbefestigungsvorrichtung nach einem der vorstehenden Ansprüche 1 oder 2, **dadurch gekennzeichnet, dass** mehrere Zugentlastungselemente (23A... 23G) in einer Reihe in der Hauptrichtung (H) angeordnet sind und/oder verschiebbar an einer Klemmplatte (210) gehalten sind und/oder lösbar an einer Klemmplatte (210) gehalten sind.

4. Endbefestigungsvorrichtung nach einem der vorstehenden Ansprüche 1 bis 3, **dadurch gekennzeichnet, dass** die Klemmplatten (210) als flache Platten mit in Frontansicht ebenen Hauptflächen (22) bzw. mit in Hauptrichtung gleichbleibender Plattenstärke, ausgeführt sind.

5. Endbefestigungsvorrichtung nach einem der vorstehenden Ansprüche 1 bis 4, **dadurch gekennzeichnet, dass** die Klemmplatten (210) aus Metall, vorzugsweise extrudierten Metallprofilen, insbesondere aus Aluminium, oder aus verstärktem Kunststoff, insbesondere als Spritzgussteile, hergestellt sind.

6. Endbefestigungsvorrichtung nach einem der vorstehenden Ansprüche 1 bis 5, **dadurch gekennzeichnet, dass**
- die Zugentlastungselemente (23A... 23G) einteilig aus Kunststoff, insbesondere als Spritzgussteile, hergestellt sind, wobei vorzugsweise die Plattenverbinder (240A; 240B) einteilig aus einem härteren Kunststoff als die Zugentlastungselemente (23A... 23G) hergestellt sind, insbesondere als Spritzgussteile; und/oder
die Zugentlastungselemente (23A... 23G) aus einem Material gefertigt sind, das weicher ist als das Material die Klemmplatten (210) und/oder der Plattenverbinder (240A; 240B).

7. Endbefestigungsvorrichtung nach einem der vorstehenden Ansprüche 1 bis 6, **dadurch gekennzeichnet, dass** die
- Klemmplatten (210) in beiden seitlichen Endbereichen (214) jeweils mindestens zwei Durchgangslöcher für Schraubverbindungen und zwischen den Endbereichen (214) entlang der Hauptrichtung (H) ein oder mehrere zusätzliche Durchgangslöcher (215) für Schraubverbindungen aufweisen; und/oder
- die Plattenverbinder (240A; 240B) mindestens zwei, vorzugsweise drei Durchgangslöcher (245) für Schraubverbindungen aufweisen, welche bevorzugt zur fluchtenden Anordnung mit entsprechenden Durchgangslöchern (215) für Schraubverbindungen in den Klemmplatten (210) angeordnet sind.

8. Endbefestigungsvorrichtung nach einem der vorstehenden Ansprüche 1 bis 7 zum Befestigen von mindestens zwei Umhüllungen (2) in übereinanderliegenden Lagen umfassend mindestens drei übereinander angeordnete Klemmplatten (210), wobei im montierten Zustand an der mittleren Klemmplatte beidseitig Zugentlastungselemente (23A... 23G) gehalten sind.

9. Endbefestigungsvorrichtung nach einem der vorstehenden Ansprüche 1 bis 8, **dadurch gekennzeichnet, dass** die Zugentlastungselemente (23A... 23G) in Längsrichtung bzw. senkrecht zur Hauptrichtung der Klemmplatten (210) über die Klemmplatten vorstehen, insbesondere beidseitig, und vorzugsweise die jeweilige Stirnseite (211) der Klemmplatte (210) zumindest teilweise umgreifen.

10. Endbefestigungsvorrichtung (20; 30; 40; 50; 60) nach einem der vorstehenden Ansprüche 1 bis 9,
wobei die mindestens zwei Klemmplatten (210) jeweils einen Haltebereich (211) für Zugentlastungselemente aufweisen, welcher die Zugentlastungselemente in Richtung parallel zur Hauptfläche gegen Verschiebung in Längsrichtung an der Klemmplatte hält; **dadurch gekennzeichnet, dass** der Haltebereich (211) einen Profilquerschnitt (220) mit Hinterschneidung (221) bildet, und dass
die Zugentlastungselemente (23A... 23G) jeweils mindestens einen Verbindungsbereich (230) aufweisen, welcher zum formschlüssigen Hintergreifen der Hinterschneidung mit dem Profilquerschnitt des Haltebereichs korrespondiert, um das Zugentlastungselement (23A... 23G) auch in Richtung senkrecht zur Hauptfläche (22) an der jeweiligen Klemmplatte (210) zu halten.

11. Endbefestigungsvorrichtung nach Anspruch 10 oder 11, wobei die Klemmplatte zwei kurze Schmalseiten (212) aufweist, **dadurch gekennzeichnet, dass** der Profilquerschnitt (220) an zumindest einer der kurzen Schmalseiten (212) offen nach Außen mündet, vorzugsweise an beiden kurzen Schmalseiten offen nach Außen mündet, und/oder dass der Profilquerschnitt (220) sich über zumindest einen überwiegenden Anteil der Länge, vorzugsweise über die gesamte Länge der Klemmplatte (210) erstreckt.

12. Endbefestigungsvorrichtung (20; 30; 40; 50; 60) nach einem der vorstehenden Ansprüche 1 bis 10, **dadurch gekennzeichnet, dass** der Profilquerschnitt durch eine stirnseitige Nut (221) an jeder der beiden Stirnseiten (211) gebildet ist und entsprechende stirnseitige Verbindungsbereiche (230) an den Zugentlastungselementen (23A... 23G) vorgesehen sind, vorzugsweise wobei die Verbindungsbereiche (230) einen stirnseitig überstehenden Kantenschutz für die Leitungen bilden.

13. Endbefestigungsvorrichtung nach einem der Ansprüche 10 bis 12, wobei jede Klemmplatte zwei abgewandte Hauptflächen (622) aufweist und beidseitig jeweils ein Haltebereich (613) für Zugentlastungselemente (623) vorgesehen ist, welcher senkrecht zur Hauptrichtung (H) einen Profilquerschnitt (620) mit einer Hinterschneidung bildet; insbesondere wobei die beiden Haltebereiche (613) in Längsrichtung (L) zueinander versetzt an der Klemmplatte (610) vorgesehen sind, und vorzugsweise rotationssymmetrisch zu einer Hauptmittelachse (M) angeordnet sind und/oder vorzugsweise mittig in einer von zwei Breitenhälften der Klemmplatte (610) angeordnet sind.

14. Endbefestigungsvorrichtung nach einem der Ansprüche 1 bis 4, **dadurch gekennzeichnet, dass** jeder Haltebereich eine gegenüber der Hauptfläche vertiefte Profilnut (221; 521; 621) und/oder einen gegenüber der Hauptfläche vorstehenden Profilvorsprung (527) umfasst; vorzugsweise wobei die Profilnut (521; 621) und/oder der Profilvorsprung (527) einen T-förmigen, V-förmigen oder Schwalbenschwanz-förmigen Profilquerschnitt (520; 620) bildet und die Verbindungsbereiche (530; 630) der Zugentlastungselemente einen formschlüssig passenden Querschnitt haben.

15. Leitungsführungsvorrichtung (1) für Leitungen, wie z.B. Kabel, Schläuche oder dgl., insbesondere für eine Reinraumanwendung, umfassend:
- mindestens eine längliche, flexible Umhüllung (2), die hin- und hergehend verfahrbar ist, und eine Anzahl von kanalartigen, sich in einer Längsrichtung (L) von einem ersten Ende zu einem zweiten Ende erstreckenden Aufnahmen (7) für Leitungen (8) aufweist;
- eine erste Endbefestigungsvorrichtung (20) für das erste Ende und eine zweite Endbefestigungsvorrichtung (20) für das zweite Ende der Umhüllung;
- wobei die erste Endbefestigungsvorrichtung (20) und/oder die zweite Endbefestigungsvorrichtung (20) eine Endbefestigungsvorrichtung (20) nach einem der vorstehenden Ansprüche 1 bis 14 ist.
